**Europäisches Patentamt**

**European Patent Office**

**Office européen des brevets**

(19)

(11) Veröffentlichungsnummer : **0 425 766 B1**

(12)

# EUROPÄISCHE PATENTSCHRIFT

(45) Veröffentlichungstag der Patentschrift :
**11.11.92 Patentblatt 92/46**

(51) Int. Cl.⁵ : **B60T 8/00**

(21) Anmeldenummer : **90114070.7**

(22) Anmeldetag : **23.07.90**

(54) **Elektrische Bremssteuerung für Kraftfahrzeugzüge.**

(30) Priorität : **26.09.89 DE 3932111**

(43) Veröffentlichungstag der Anmeldung :
**08.05.91 Patentblatt 91/19**

(45) Bekanntmachung des Hinweises auf die
Patenterteilung :
**11.11.92 Patentblatt 92/46**

(84) Benannte Vertragsstaaten :
**AT DE ES FR GB IT NL SE**

(56) Entgegenhaltungen :
**EP-A- 0 278 228**
**EP-A- 0 357 922**

(73) Patentinhaber : **KNORR-BREMSE AG**
**Moosacher Strasse 80 Postfach 401060**
**W-8000 München 40 (DE)**

(72) Erfinder : **Bielig, Peter Michael**
**Albrechtstrasse 24**
**W-8000 München 19 (DE)**
Erfinder : **Broch, Walter**
**Hauptstrasse 15**
**W-8061 Wiedenzhausen (DE)**
Erfinder : **Schuhmacher, Johannes**
**Ohlstadter Strasse 16**
**W-8000 München 70 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine elektrische Bremssteuerung für Kraftfahrzeugzüge, deren Anhängefahrzeuge mit einem elektronischen ABV-Regler, der unter Nutzung von 5 Polen einer 7-poligen Norm-Steckvorrichtung für aromatische Blockierverhinderer (DIN 74001 und ggf. DIN Iso 7638) elektrisch an die Anhänger-ABV-Versorgung-, Informations- und Warneinrichtung der Triebfahrzeuge anschließbar ist, mit einem elektrischen Bremsdruckregler, der über weitere Pole der Norm-Steckvorrichtung elektrisch an eine elektrische, vom Kraftfahrzeugführer betätigbare Bremsdruckregelvorrichtung des Triebfahrzeuges anschließbar ist, und mit einem zumindest hisichtlich einer K- und einer L-Leitung den Norm-Anforderungen (Entwurf DIN ISO 9141) entsprechenden Fahrzeug-Diagnose-System für zumindest den Bremsdruckregler des Anhängefahrzeuges ausgerüstet sind, wobei das Fahrzeug-Diagnose-System vermittels der K- und der L-Leitung an eine gesondertes Diagnose-Prüfgerät anschließbar ist.

Unter Kraftfahrzeugzüge sind hier auch Sattelschlepperzüge zu verstehen, wobei deren Auflieger die Anhängefahrzeuge bilden.

Die vorstehend erwähnte 7-Pol-Norm-Steckvorrichtung ist mitsamt der Belegung von 5 Polen aus DIN 74001 vom Oktober 1987 bekannt. Die eingangs erwähnte Steckvorrichtung kann des weiteren, muß jedoch nicht den Bemessungsangaben der DIN ISO 7638, ebenfalls vom Oktober 1987, entsprechen.

Bei einem Kraftfahrzeugzug mit einer ABV-Ausrüstung, wie sie aus Bild 1 der DIN 74001 bekannt ist, ist es naheliegend, eine elektrische Bremssteuerung für das Trieb- und das Anhängefahrzeug vorzusehen, wobei zur Signalübertragung zwischen der vom Kraftfahrzeugführer betätigbaren Bremsdruckregelvorrichtung des Triebfahrzeuges und dem Bremsdruckregler des Anhängefahrzeuges eine zweipolige Kabelverbindung vorgesehen wird, welche über die beiden noch freien Pole der Norm-Steckvorrichtung kuppelbar ist. Bei einer derartigen Bremssteuerung muß zumindest der elektrische Bremsdruckregler des Anhängefahrzeuges diagnostizierbar sein, wozu ein Diagnosesystem entsprechend Entwurf DIN ISO 9141 vom September 1987 vorzusehen ist. Nach dieser Norm ist das zu diagnostizierende Gerät mit einem im Fahrzeug zu installierenden Fahrzeug-Diagnose-System auszustatten, welches über eine K- und eine L-Leitung mit einem gesonderten, nicht fest im Fahrzeug montierten Diagnose-Prüfgerät elektrisch verbindbar sein muß; das im wesentlichen einem Personalcomputer (PC) ähnliche Diagnose-Prüfgerät veranlaßt durch entsprechende Signalabgabe das Fahrzeug-Diagnose-System zu einer Diagnose des zu diagnostizierenden Gerätes bzw. dessen Teile, die Diagnose- bzw. bloße Einzelprüfergebnisse werden sodann vom Fahrzeug-Diagnose-System dem Diagnose-Prüfgerät zurückgemeldet und dort, ggf. nach entsprechender Verarbeitung, als aussagekräftige Diagnoseergebnisse angezeigt und/oder gespeichert. Der elektrische Anschluß des Diagnose-Prügerätes bereitet bei wie vorstehend erwähnt mit elektrischen Bremsdruckreglern ausgestatteten Anhänge-Fahrzeugen Schwierigkeiten, es müssen am Anhänge-Fahrzeug hierzu zusätzliche, Bauaufwand erfordernde Anschlußstellen geschaffen werden, welche trotz relativ seltener Nutzung sichere Kontaktgabe gewährleisten und keinerlei Verwechslungsgefahr begründen dürfen; zudem sollten sie gut zugänglich sein.

Der Erfindung liegt die Aufgabe zugrunde, eine elektrische Bremssteuerung der eingangs genannten Art derart auszugestalten, daß das Diagnose-Prüfgerät an das Anhängefahrzeug an gut zugänglicher Stelle in einfacher Weise sowie unter sicherer Kontaktgabe anschließbar ist, wobei die Anschlußmöglichkeit einen nur vernachläßigbar geringen Mehraufwand erfordert. Selbstverständlich ist die Bremssteuerung im übrigen ebenfalls unter Vermeidung von Mehraufwand derart auszugestalten, daß ihre Funktionsfähigkeit und insbesondere Steuerbarkeit durch die Anschlußmöglichkeit des Diagnose-Prüfgerätes nicht nachteilig beeinflußt wird.

Diese Aufgabe wird nach der Erfindung für eine elektrische Bremssteuerung der eingangs genannten Art dadurch gelöst, daß der 6. Pol der Normsteckvorrichtung einer elektrischen Kabel verbindung zugeordnet ist, die im Fahrbetrieb der bidirektionalen Datenübertragung zwischen der den "master" bildenden elektrischen Bremsdruckregelvorrichtung des Triebfahrzeuges und dem den "slave" bildenden, elektrischen Bremsdruckregler des Anhängefahrzeuges dient und daß bei abgekoppeltem Anhängefahrzeug im Diagnosebetrieb der vom 6. Pol des am Anhängefahrzeug befindlichen Teils der Norm-Steck-vorrichtung ausgehende Kabelabschnitt der K-Leitung und ein vom 7. Pol des Norm-Steckvorrichtung-Teils ausgehende Kabel einem Abschnitt der L-Leitung des Fahrzeug-Diagnose-Systems zugehört, wobei beide Abschnitte über den 6. und 7. Pol des Norm-Steckvorrichtung-Teils und eines mit diesem kuppelbaren Teils mit den K- bzw. L-Leitungsabschnitten des Diagnose-Prüfgerätes verbindbar sind.

Die Unteransprüche zeigen nach der weiteren Erfindung vorteilhafte Ausbildungsmöglichkeiten für eine derartige, elektrische Bremssteuerung auf.

In den Zeichnungen ist ein Ausführungsbeispiel einer nach der Erfindung ausgebildeten, elektrischen Bremssteuerung dargestellt und erläutert und zwar zeigt

Fig.1 schematisch die erfindungswesentlichen Teile der elektrischen Bremssteuerung,

Fig.2 die Anordnung im Diagnosebetrieb,

Fig.3 das Datenformat für die zu übertragenden Daten und

Fig.4 die Zeitbedingungen in einem Kommunikationszyklus der Datenübertragung.

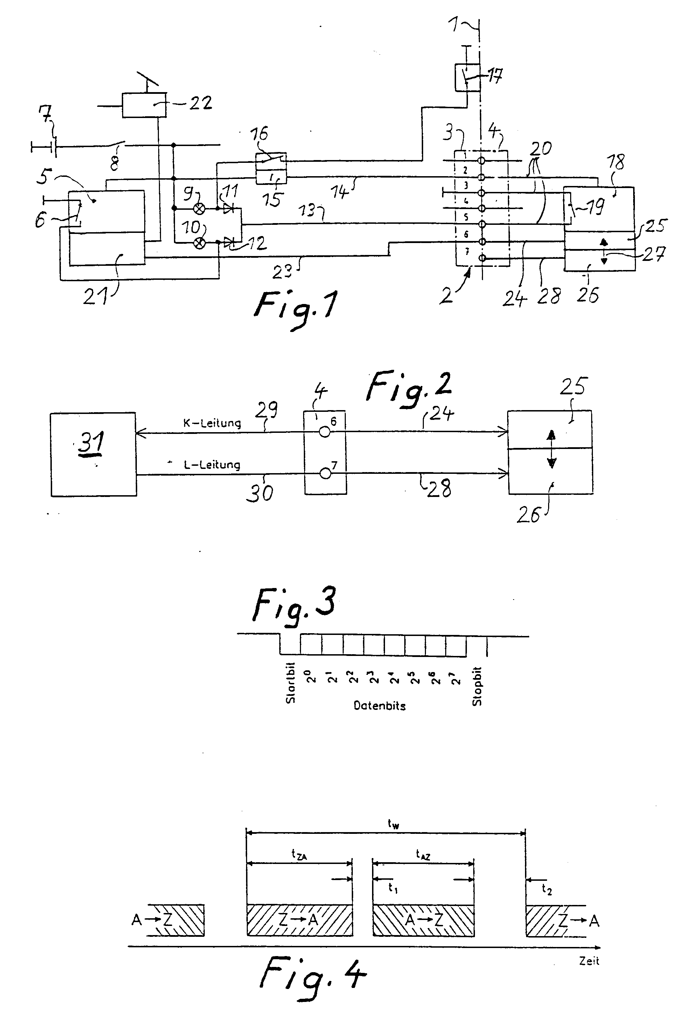

In Fig.1 is mit einer strichpunktierten Linie 1 die Kupplungs-Schnittstelle zwischen einem links dieser Linie 1 befindlichen Triebfahrzeug und einem rechts dieser Linie 1 befindlichen Anhängefahrzeug eines Kraftfahrzeugzuges angedeutet. Diese Kupplungs-Schnittstelle nach Linie 1 wird neben einer nicht dargestellten, üblichen, mechanischen Anhängerkupplung bzw. Aufsattelvorrichtung von einer Norm-Steckvorrichtung 2 für automatische Blockierverhinderer überbrückt, welche aus zwei miteinander kuppelbaren Teilen 3 und 4 besteht, deren eines Teil als Stecker und deren anderes Teil als Steckdose ausgebildet ist. Die Norm-Steckvorrichtung dient dem Verbinden elektrischer Leitungen des Triebfahrzeuges und des Anhängefahrzeuges in deren Kupplungszustand, sie ist 7-polig ausgebildet, wobei in Teil 3 die einzelnen Pole durch die eingeschriebenen Zahlen 1-7 numeriert sind. Eine derartige Norm-Steckvorrichtung ist aus der Deutschen Norm DIN 74001 vom Oktober 1987 mitsamt den durch die Pole 1-5 elektrisch zu verbindenden Blockierverhinderer-Geräten des Triebfahrzeuges und des Anhängefahrzeuges bekannt, es wird hierzu auf Bild 1 der erwähnten DIN 74001 verwiesen. Übereinstimmend hierzu ist in Fig.1 im Triebfahrzeug ein elektronischer Regler 5 des automatischen Blockierverhinderers, im weiteren ABV genannt, dargestellt, welcher einen Arbeitskontakt 6 der ABV-Warneinrichtung beinhaltet. Die Stromversorgung 7 ist über einen Fahrtschalter 8 einschaltbar, unter dem Bezugszeichen 9 ist eine Lampe der ABV-Informationseinrichtung und unter dem Bezugszeichen 10 eine Lampe der ABV-Warneinrichtung dargestellt, die beide einseitig über Dioden 11 bzw. 12 an ein zum Pol 5 des Teiles 3 der Norm-Steckvorrichtung 2 führendes Kabel 13 angeschlossen sind. In ein zum Pol 2 des Teiles 3 führendes Stromversorgungskabel 14 für das Anhänger-ABV ist ein Stromsensor 15 eingeordnet, welcher einen Ruhekontakt 16 betätigt, welcher einer Anhänger-Erkennungseinrichtung zugehört, welche des weiteren einen von An- bzw. Abgekuppeltsein des Anhänge-Fahrzeuges schaltbaren Arbeitskontakt 17 umfaßt.

Im Anhängefahrzeug sind gemäß Fig.1 ein elektronischer Regler 18 des Anhänger-ABV sowie nicht dargestellte, von diesem elektronischen Regler 18 ansteuerbare Ventile zur Steuerung der Druckbeaufschlagung der Anhänger-Bremszylinder angeordnet; der elektronische Regler 18 kann einen Arbeitskontakt 19 der ABV-Warneinrichtung beinhalten und ist über zu den Polen 2,3 und 5 der Norm-Steckvorrichtung 2 führende Kabel 20 an das Triebfahrzeug ankuppelbar.

Die Pole 1 und 4 der Norm-Steckvorrichtung 2 sind anderweitig belegt, sie können der Verbindung von Erregungsleitungen für nicht dargestellte Magnetventile im Anhängefahrzeug dienen, wobei die Magnetventile den Bremszylinderdruck im Anhängefahrzeug steuern. Diese Pol-Belegung der Norm-Steckvorrichtung 2 mitsamt der konstruktiven Gestaltung dieser Norm-Steckvorrichtung 2 kann somit der Deutschen Norm DIN ISO 7638 vom Oktober 1987 entsprechen, wobei abweichend jedoch auch die Pole 6 und 7 der Norm-Steckvorrichtung mit elektrischen Kontaktstiften bzw. Steckhülsen ausgattet sind; auch im übrigen kann die Norm-Steckvorrichtung 2 von dieser DIN ISO 7638 abweichend ausgebildet und verschaltet sein.

Zusätzlich ist der Kraftfahrzeugzug mit einer elektrischen Bremsdruckregelung ausgestattet, wozu im Triebfahrzeug eine Bremsdruckregelvorrichtung 21 angeordnet ist, welche über ein Steuergerät 22 vom Kraftfahrzeugführer betätigbar ist. Von der Bremsdruckregelvorrichtung 21 führt ein Kabel 23 zum 6. Pol der Norm-Steckvorrichtung 2, von welchem im Abhängefahrzeug ein Kabel 24 zu einem elektrischen Bremsdruckregler 25 weiterführt; der elektrische Bremsdruckregler 25 steuert über nicht dargestellte Einrichtungen die Bremszylinderdruckbeaufschlagung im Anhängefahrzeug, welche während Blockiervorgängen von Steuervorgängen überlagerbar sind, die vom elektronischen Regler 18 ausgelöst werden; es kann demgemäß zweckmäßig sein, den elektrischen Bremsdruckregler 25 und den elektronischen Regler 18 zu einer Baueinheit zusammenzufassen.

Des weiteren ist im Anhängefahrzeug ein Fahrzeug-Diagnose-System 26 vorgesehen, welches zumindest den Bremsdruckregler 25, ggf. aber zusätzlich auch den elektronischen Regler 18 mitsamt den angeschlossenen Peripheriegeräten zu diagnostizieren vermag; zu diesem Diagnosezweck ist ein Datenaustausch zwischen dem Fahrzeug-Diagnose-System 26 und zumindest dem Bremsdruckregler 25 erforderlich, wie er durch den Pfeil 27 angedeutet ist und wozu es zweckmäßig ist, das Fahrzeug-Diagnose-System 26 mit dem Bremsdruckregler 25 baulich zu vereinen. Vom 7. Pol des Teiles 4 der Norm-Steckvorrichtung geht ein Kabel 28 aus, welches zum Fahrzeug-Diagnose-System 26 führt. Das Fahrzeug-Diagnose-System 26 entspricht zumindest hinsichtlich der Kabel 25 und 28 dem Entwurf der Deutschen Norm DIN ISO 9141 vom September 1987, wobei das Kabel 24 einen Abschnitt der K-Leitung und das Kabel 28 einen Abschnitt der L-Leitung bildet. Wie aus der erwähnten Norm bekannt sind im Diagnose-Betrieb bei vom Zugfahrzeug abgekoppeltem Anhängefahrzeug die K-Leitung und die L-Leitung mit einem gesonderten Diagnose-Prüfgerät elektrisch zu verbinden. In Fig.2 ist dies schematisch dargestellt, wobei übereinstimmend zu Fig.1 für das Anhängefahrzeug die von den Polen 6 und 7 des Teiles 4 der Norm-Steckvorrichtung 2 ausgehenden, zum Bremsdruckregler 25 bzw. zum Fahrzeug-Diagnose-System 26 führenden Kabel 24 und 28 dargestellt sind. Zum Diagnosebetrieb sind die Pole 6 und 7 des Teiles 4 durch eine geeignete Kupplungsvorrichtung mit der K-Leitung 29 bzw. der

3

EP 0 425 766 B1

L-Leitung 30 zu kuppeln, welche beide zu dem Diagnose-Prüfgerät 31 führen. Das Diagnose-Prüfgerät 31 ist im wesentlichen wie ein Personalcomputer (PC) ausgebildet, über die K- und L-Leitungen 29 und 30 vermag es das Fahrzeug-Diagnose-System 26 sowie den elektronischen Regler 18 zur Durchführung von Diagnose-Vorgängen anzusteuern und die von letzteren rückgemeldeten Diagnose- bzw. Prüfergebnisse zu empfangen und ggf. nach Auswertung anzuzeigen bzw. zu speichern, wobei insbesondere auch bei der Diagnose festgestellte Fehler mitsamt deren Lokalisierung angezeigt bzw. gespeichert werden. Die K-Leitung 29 mitsamt dem Kabel 24 dient hierbei einer bidirektionalen und die L-Leitung 30 mitsamt dem Kabel 28 einer unidirektionalen, vom Diagnose-Prüfgerät 31 ausgehenden Datenübertragung.

Während des Fahrbetriebes des Kraftfahrzeugzuges dient die aus den über den 6. Pol der Norm-Steckvorrichtung 2 gekuppelten Kabeln 23 und 24 bestehenden Kabelverbindung 23, 24 einer bidirektionalen Datenübertragung zwischen der Bremsdruckregelvorrichtung 21 und dem elektrischen Bremsdruckregler 25, wobei die Bremsdruckregelvorrichtung 21 den "master" bildet, von welchem beispielsweise Bremsanforderungen beinhaltende Datenblöcke gesendet werden, welche von dem als "slave" dienenden, elektronischen Regler 25 empfangen, ausgewertet und befolgt werden und auf welche der elektronische Regler 25 mit dem Aussenden von Datenblöcken antwortet, welche von der Bremsdruckregelvorrichtung 21 empfangen werden und dieser die Befehlsausführung und/oder den Istzustand bzw. sonstige Daten der Anhängerbremse melden; je ein von der Bremsdruckregelvorrichtung ausgehender Datenblock und ein nachfolgend von dieser empfangener Datenblock bilden einen Kommunikationszyklus. Es ist zweckmäßig, die Wiederholrate für derartige Kommunikationszyklusse auf ca. 50 ms und die Baudrate auf ca. 4 800 Baud festzulegen. Das Datenformat entspricht dabei zweckmäßig der Fig.3, wobei jedes Datenwort im MRZ-Verfahren (Non-Return-to-Zero-Verfahren) beginnend mit einen Start-Bit, gefolgt von acht Daten-Bit (LSB, d.h. Least Significant Bit) und abgeschlossen von einem Stop-Bit gesendet wird. Hinsichtlich des Blockformates wird in Übertragungsrichtung vom Zugfahrzeug zum Anhängefahrzeug zweckmäßig festgelegt, daß die Datenblöcke eine feste Länge von acht Byte aufweisen und wie folgt aufgebaut sind :

Byte 1 : Blockkennung
Byte 2 : Systemzustand (z.B. Dauerbremse)
Byte 3 : Bremsanforderung (Sollwert)
Byte 4 : Fahrzeuggeschwindigkeit
Byte 5 : Reserve
Byte 6 : Reserve
Byte 7 : Reserve
Byte 8 : Prüfbyte.

In Übertragungsrichtung vom Anhänger zum Zugfahrzeug weisen die Datenblöcke ebenfalls zweckmäßig eine feste Länge von acht Byte auf und sind wie folgt aufgebaut :

Byte 1 : Blockkennung
Byte 2 : Systemzustand und Identifikation (z.B. Federspeicher ja/nein)
Byte 3 : Diagnose 1 (z.B. Fehlerzustände)
Byte 4 : Diagnose 2 (z.B. Druckniveau)
Byte 5 : Fahrzeuggeschwindigkeit
Byte 6 : Reserve
Byte 7 : Reserve
Byte 8 : Prüfbyte.

In Fig.4 sind die Zeitbedingungen für einen Kommunikationszyklus mit Wiederholzeit, Blockdauer und Pausenzeiten dargestellt. Die Zeiten werden dabei zweckmäßig wie folgt festgelegt :

$t_W$ = 50 ms
$t_{ZA}$ < = 20 ms
$T_{AZ}$ < = 20 ms
1 ms < = $t_1$ <=3 ms
$t_2$ > = 7 ms.

In Fig.4 bedeutet die Pfeilrichtung Z nach A eine Signalübertragung vom Zug- zum Anhängefahrzeug und entsprechend umgekehrt eine Pfeilrichtung von A nach Z eine Signalübertragung vom Anhänge- zum Zugfahrzeug.

Hinsichtlich der Datensicherheit ist es zum Erkennen von Übertragungsfehlern zweckmäßig, am Ende eines jeden Datenblocks ein Prüf-Byte mitzuschicken, das durch eine XOR-Verknüpfung der zuvor geschickten Bytes berechnet wird. Die weiteren Signalfestlegungen können dabei in Anlehnung an die erwähnte Norm DIN ISO 9141 erfolgen, dies gilt insbesondere hinsichtlich der Logikpegel, der Anstiegs- und Abfallzeiten sowie der ohmschen und kapazitiven Kennwerte der Kabelverbindung.

Durch die erfindungsgemäße Ausbildung der elektrischen Bremssteuerung wird, wie aus vorstehender Be-

EP 0 425 766 B1

schreibung ersichtlich, erreicht, daß im Fahrbetrieb die ABV-Ausrüstung des Zug- und Anhängefahrzeuges unverändert in bekannter und genormter Weise arbeiten und zusammenwirken, daß zusätzlich über die Norm-Steckverbindung 2 eine den modernen Anforderungen vollauf genügende, elektrische Bremssteuerung in den Kraftfahrzeugzug installierbar ist, wobei zumindest dessen im Anhängefahrzeug angeordneter Teil vermittels eines normgerechten Diagnose-Prüfgerätes bei abgekuppeltem Anhänger durch einfachen Anschluß dieses Diagnose-Prüfgerätes an die Norm-Steckvorrichtung des Anhängers unter Doppelausnutzung eines Kabels und der zugehörigen Steckvorrichtung diagnostizierbar ist.

Kurzfassung:

Die elektrische Bremssteuerung für Kraftfahrzeugzüge weist eine ABV-Ausrüstung auf, deren auf das Zug- und Anhängefahrzeug verteilte Teile durch eine 7-polige Norm-Steckvorrichtung (2) unter Belegung von 5 Polen miteinander elektrisch kuppelbar sind. Es ist des weiteren eine elektrische Bremssteuerung vorgesehen, welche eine Bremsdruckregelvorrichtung (21) im Zugfahrzeug und einen Bremsdruckregler (25) im Anhängefahrzeug umfaßt, die vermittels einer über den sechsten Pol der Norm-Steckvorrichtung (2) geführten Kabelverbindung (23,24) miteinander elektrisch verbunden sind; die Kabelverbindung (23,24) dient dabei der bidirektionalen Signalübertragung. Im Anhängefahrzeug ist des weiteren ein Fahrzeug-Diagnose-System (26) vorgesehen, welches zumindest den Bremsdruckregler (25) mit Peripherie-Geräten zu diagnostizieren vermag. Zur Diagnostizierung ist bei abgekuppeltem Anhängefahrzeug an das diesem zugehörige Teil 4 der Norm-Steckvorrichtung (2) ein Diagnose-Prüfgerät elektrisch anzuschließen, wobei über den sechsten Pol und das Kabel (24) die K-Leitung und über den siebten Pol und ein von diesem zum Fahrzeug-Diagnose-System (26) führendes Kabel (28) die L-Leitung gekuppelt wird.

Die elektrische Bremssteuerung ermöglicht vermittels der Norm-Steckvorrichtung (2) den normalen Fahrbetrieb und einen Diagnosebetrieb für das Anhängefahrzeug, wobei das Diagnose-Prüfgerät in einfacher Weise anschließbar ist.

**Patentansprüche**

1. Elektrische Bremssteuerung für Kraftfahrzeugzüge, deren Anhängefahrzeuge mit einem elektronischen ABV-Regler (18), der unter Nutzung von 5 Polen einer 7-poligen Norm-Steckvorrichtung (2) für automatische Blockierverhinderer (DIN 74001 und ggf. DIN ISO 7638) elektrisch an die Anhänger-ABV-Versorgungs-, Informations- und Warneinrichtung der Triebfahrzeuge anschließbar ist, mit einem elektrischen Bremsdruckregler (25), der über weitere Pole der Norm-Steckvorrichtung (2) elektrisch an eine elektrische, vom Kraftfahrzeugführer betätigbare Bremsdruckregelvorrichtung (21) des Triebfahrzeuges anschließbar ist, und mit einem zumindest hinsichtlich einer K- und einer L-Leitung den Norm-Anforderungen (Entwurf DIN ISO 9141) entsprechenden Fahrzeug-Diagnose-System (26) für zumindest den Bremsdruckregler (25) des Anhängerfahrzeuges ausgerüstet sind, wobei das Fahrzeug-Diagnose-System (26) vermittels der K- und der L-Leitung an ein gesondertes Diagnose-Prüfgerät (31) anschließbar ist, dadurch gekennzeichnet, daß der 6. Pol der Norm-Steckvorrichtung (2) einer elektrischen Kabelverbindung (23,24) zugeordnet ist, die im Fahrbetrieb der bidirektionalen Datenübertragung zwischen der den "master" bildenden, elektrischen Bremsdruckregelvorrichtung (21) des Triebfahrzeuges und dem den "slave" bildenden, elektrischen Bremsdruckregler (18) des Anhängefahrzeuges dient, und daß bei abgekuppeltem Anhängerfahrzeug im Diagnosebetrieb der vom 6. Pol des am Anhängerfahrzeug befindlichen Teils (4) der Norm-Steckvorrichtung (2) ausgehende Kabelabschnitt (24) der K-Leitung und ein vom 7. Pol des Norm-Steckvorrichtung-Teils (4) ausgehendes Kabel (28) einem Abschnitt der L-Leitung des Fahrzeug-Diagnose-Systems (26) zugehört, wobei beide Abschnitte über den 6. und den 7. Pol des Norm-Steckvorrichtung-Teiles (4) und eines mit diesem kuppelbaren Teils mit den K- bzw. L-Leitungsabschnitten (29 bzw. 30) des Diagnose-Prüfgerätes (31) verbindbar sind.

2. Bremssteuerung nach Anspruch 1, dadurch gekennzeichnet, daß im Fahrbetrieb die bidirektionale Datenübertragung durch die Kabelverbindung (23,24) durch vom "master" (Bremsdruckreglervorrichtung 21) ausgehende Datenblöcke erfolgt, auf welche der "slave" (Bremsdruckregler 25) mit Datenblöcken antwortet, wobei die Wiederholrate für einen Kommunikationszyklus ca. 50 ms und die Baudrate ca. 4 800 Baud beträgt.

3. Bremssteuerung nach Anspruch 2, dadurch gekennzeichnet, daß jedes Datenwort im NRZ-Verfahren beginnend mit einem Startbit, gefolgt von 8 Datenbits und abgeschlossen von einem Stopbit gesendet wird.

5

4.  Bremssteuerung nach Anspruch 3, dadurch gekennzeichnet, daß in Übertragungsrichtung vom Zug- zum Anhängefahrzeug die Datenblöcke eine feste Länge von 8 Byte mit folgendem Aufbau aufweisen :

    Byte 1      : Blockkennung
    Byte 2      : Systemzustand (z.B. Dauerbremse)
    Byte 3      : Bremsanforderung (Sollwert)
    Byte 4      : Fahrzeuggeschwindigkeit
    Byte 5      : Reserve
    Byte 6      : Reserve
    Byte 7      : Reserve
    Byte 8      : Prüfbyte.

5.  Bremssteuerung nach Anspruch 3 oder 4, dadurch gekennzeichnet, daß in Übertragungsrichtung vom Anhänge- zum Zugfahrzeug die Datenblöcke eine feste Länge von 8 Byte mit folgendem Aufbau aufweisen :

    Byte 1      : Blockkennung
    Byte 2      : Systemzustand und Identifikation (z.B. Federspeicher ja/nein)
    Byte 3      : Diagnose 1 (z.B. Fehlerzustände)
    Byte 4      : Diagnose 2 (z.B. Druckniveau)
    Byte 5      : Fahrzeuggeschwindigkeit
    Byte 6      : Reserve
    Byte 7      : Reserve
    Byte 8      : Prüfbyte.

6.  Bremssteuerung nach einem oder mehreren der Ansprüche 2 bis 5, gekennzeichnet durch folgende Zeitfestlegungen :

    - Die Zeitdauer eines Datenblockes beträgt höchstens 20 ms;
    - die beiden Datenblöcke eines Kommunikationszyklusses folgen im Abstand zwischen mindestens 1 ms bis höchstens 3 ms aufeinander;
    - zwischen dem Datenblockende eines Kommunikationszyklusses und dem Datenblockanfang eines nachfolgenden Kommunikationszyklusses befindet sich eine Pause von mindetens 7 ms.

7.  Bremssteuerung nach einem oder mehreren der vorstehenden Ansprüche 1 bis 6, dadurch gekennzeichnet, daß im Diagnosebetrieb die K-Leitung (29,24) einer bidirektionalen und die L-Leitung (30,28) einer unidirektionalen, vom Diagnose-Prüfgerät (31) ausgehenden Datenübertragung dient.

## Claims

1.  Electric brake controller for motor-vehicle trains, the trailer vehicles of which are equipped with an electronic automatic antilock system control (18), which, with the use of 5 poles of a 7-pole standard plug device (2) for automatic antilock systems (DIN 74001 and perhaps DIN ISO 7638), can be electrically connected to the trailer automatic antilock system supply, information and warning device of the driving vehicles, with an electric brake-pressure controller (25), which can be electrically connected by way of further poles of the standard plug device (2) to an electric brake-pressure-control device (21) of the driving vehicle, the device being operable by the driver of the motor-vehicle, and with a vehicle diagnosis system (26), corresponding to the standard requirements (design DIN ISO 9141) at least with respect to a K and an L line, for at least the brake-pressure controller (25) of the trailer vehicle, with the vehicle diagnosis system (26) being capable of being connected by means of the K and the L line to a separate diagnosis/testing apparatus (31), characterized in that the 6th pole of the standard plug device (2) is associated with an electric cable connection (23,24), which in driving operation serves for the bidirectional transmission of data between the electric brake-pressure-control device (21) of the driving vehicle, which device forms the "master", and the electric brake-pressure controller (18) of the trailer vehicle, which controller forms the "slave", and that in diagnosis operation with the trailer vehicle decoupled the cable section (24) of the K line issuing from the 6th pole of the part (4) of the standard plug device (2) located on the trailer vehicle and a cable (28) issuing from the 7th pole of the standard plug-device part (4) belongs to a section of the L line of the vehicle-diagnosis system (26), with both sections being capable of being connected via the 6th and the 7th pole of the standard plug-device part (4) and of a part coupled therewith to the K or L line sections (29 or 30) of the diagnosis/testing apparatus (31).

2. Brake controller according to claim 1, characterized in that in driving operation the bidirectional transmission of data takes place through the cable connection (23,24) by way of data blocks issuing from the "master" (brake-pressure-control device 21), to which the "slave" (brake-pressure controller 25) answers with data blocks, with the repetition rate for a communication cycle amounting to approximately 50 ms and the baud rate amounting to approximately 4,800 baud.

3. Brake controller according to claim 2, characterized in that each data word is transmitted in the non-return-to-zero method beginning with a start bit, followed by 8 data bits and concluded by a stop bit.

4. Brake controller according to claim 3, characterized in that in the transmission direction from the tractor vehicle to the trailer vehicle the data blocks have a fixed length of 8 bytes with the following construction:

byte 1 : block characteristic
byte 2 : system state (e.g. sustained-action brake)
byte 3 : brake demand (desired value)
byte 4 : vehicle speed
byte 5 : reserve
byte 6 : reserve
byte 7 : reserve
byte 8 : test byte.

5. Brake controller according to claim 3 or 4, characterized in that in the transmission direction from the trailer vehicle to the tractor vehicle the data blocks have a fixed length of 8 bytes with the following construction:

byte 1 : block characteristic
byte 2 : system state and identification (e.g. spring energy store yes/no)
byte 3 : diagnosis 1 (e.g. error states)
byte 4 : diagnosis 2 (e.g. pressure level)
byte 5 : vehicle speed
byte 6 : reserve
byte 7 : reserve
byte 8 : test byte.

6. Brake controller according to one or more of claims 2 to 5, characterized by the following time stipulations:
- the duration of a data block amounts to at most 20 ms;
- the two data blocks of a communication cycle succeed one another at a spacing between at least 1 ms to at most 3 ms;
- there is a pause of at least 7 ms between the data-block end of a communication cycle and the data-block start of a subsequent communication cycle.

7. Brake controller according to one or more of the preceding claims 1 to 6, characterized in that in the diagnosis operation the K line (29,24) serves for bidirectional transmission of data and the L line (30,28) serves for unidirectional transmission of data issuing from the diagnosis/test apparatus (31).

**Revendications**

1. Commande électrique de freinage pour des trains routiers (trains de véhicules), dont les remorques sont susceptibles d'être reliés, grâce à l'utilisation de 5 bornes d'un dispositif à enfichage normalisé à 7 bornes (2) pour des dispositifs anti-blocages automatiques (DIN 74001 et éventuellement DIN ISO 7638), électriquement au dispositif anti-blocage, d'alimentation, d'information et d'avertissement des remorques des véhicules moteurs, avec un régulateur électronique de la pression (25) qui, par l'intermédiaire d'autres bornes du dispositif à enfichage normalisé (2), est susceptible d'être relié électriquement à un dispositif électrique de régulation de la pression de freinage (21) du véhicule moteur et susceptible d'être actionné par le conducteur du véhicule, et qui sont équipés, pour au moins le régulateur de la pression de freinage (25) de la remorque, d'un système de diagnostic de véhicule (26) qui correspond au moins, du point de vue d'un conducteur K et d'un conducteur L, aux exigences de la normalisation (projet DIN ISO 9141), ledit dispositif de diagnostic de véhicule (26) étant susceptible d'être relié, à l'aide du conducteur K et du conducteur L, à un appareil distinct du contrôle du diagnostic (31), caractérisée par le fait que la 6ème borne du dispositif à enfichage normalité (2) est associée à une liaison électrique par câble (23,24) qui sert, en marche, à la transmission bidirectionnelle entre le dispositif électrique de régulation de la pression du freinage (21) du véhicule moteur, et qui forme le "maître" et le dispositif électrique de régulation de la pression de freinage de la remorque, et qui forme "l'esclave", et qu'à l'état de désattelage de la remorque, en fonctionnement du diagnostic, la section de câble (24), issue de la 6ème borne de la partie (4) du dispositif à enfichage normalisé (2), qui se situe sur la remorque appartient au câble K, et un câble (28) issue de la 7ème borne de la partie (4) du dispositif à enfichage normalisé appartient à une section du conducteur L du système de diagnostic (26) du véhicule, les deux sections étant susceptibles d'être reliées par l'intermédiaire de la 6ème et de la 7ème borne de la partie (4) du dispositif à enfichage normalisé et d'une partie susceptible d'être accouplée avec cette dernière, avec les sections (29 et 30) des conducteurs K et L de l'appareil de contrôle du diagnostic.

2. Commande de freinage selon la revendication 1, caractérisée par le fait qu'en fonctionnement de service, la transmission bidirectionnelle des données a lieu par l'intermédiaire de la liaison à câbles (23,24) et à l'aide de blocs de données issus du "maître" (dispositif de réglage de la pression de freinage 21), et auxquels "l'esclave" (régulateur de la pression de freinage (25) répond avec des blocs de données, le taux de répétition pour un cycle de communication étant d'environ de 50 ms et le taux de baudes étant d'environ 4.800 baudes.

3. Commande de freinage selon la revendication 2, caractérisée par le fait que chaque mot de donnée est émis dans le procédé non-retour à zéro en commençant avec un bit de départ, suivi de 8 bits de données et se terminant par un bit de stop.

4. Commande de freinage selon la revendication 3, caractérisée par le fait que dans le sens de transmission allant du véhicule moteur à la remorque ou au véhicule tracté, les blocs de données ont une longueur fixe de 8 bytes ou octets ayant la constitution suivante :
Byte 1 : caractérisation du bloc
Byte 2 : état du système (par exemple frein à régime continu)
Byte 3 : demande de freinage (valeur de consigne)
Byte 4 : vitesse du véhicule
Byte 5 : réserve
Byte 6 : réserve
Byte 7 : réserve
Byte 8 : byte de contrôle

5. Commande de freinage selon la revendication 3 ou 4, caractérisée par le fait que dans le sens de transmission du véhicule tracté au véhicule moteur, les blocs de données ont une longueur fixe de 8 bytes ou octets ayant la constitution suivante :
Byte 1 : caractérisation du bloc
Byte 2 : état du système et identification (par exemple accumulateur à ressort oui/non)
Byte 3 : diagnostic 1 (par exemple états défectueux)
Byte 4 : diagnostic 2 (par exemple niveau de la pression)
Byte 5 : vitesse du véhicule
Byte 6 : réserve
Byte 7 : réserve
Byte 8 : byte de contrôle

6. Commande de freinage selon une ou plusieurs des revendications 2 à 5, caractérisée par la fixation suivante des données :
- La durée d'un bloc de données est au plus égale à 20 ms ;
- Les deux blocs de données d'un cycle de communication se suivent à une distance se situant entre au moins 1 ms à au moins 3 ms ;
- Entre l'extrémité du bloc de données d'un cyle de communication et le début d'un bloc de données d'un cycle de communication suivant intervient une pause d'au moins 7 ms.

7. Commande de freinage selon une ou plusieurs des revendications précédentes 1 à 6, caractérisée par le fait qu'en fonctionnement de diagnostic, le conducteur K (29,24) sert à une transmission bidirectionnelle et le conducteur L (30,28) à une transmission undirectionnelle issue de l'appareil de contrôle du diagnostic (31).

Fig.1

Fig.2

K—Leitung

L—Leitung

Fig.3

Startbit  $2^0$  $2^1$  $2^2$  $2^3$  $2^4$  $2^5$  $2^6$  $2^7$  Stopbit

Datenbits

$t_W$

$t_{ZA}$     $t_{AZ}$

$t_1$

$t_2$

A→Z     Z→A     A→Z     Z→A

Zeit

Fig. 4